# EUROPEAN PATENT SPECIFICATION

(11) **EP 2 903 446 B1**
(45) Date of publication and mention of the grant of the patent: **13.03.2019**
(21) Application number: 13845100.0
(22) Date of filing: 08.10.2013
(51) Int. Cl.: A23C 9/123, A23C 9/13

(54) **CULTURED DAIRY PRODUCTS HAVING EXCELLENT FREEZE/THAW PROPERTIES**
KULTIVIERTE MILCHPRODUKTE MIT HERVORRAGENDEN EINFRIER-/AUFTAUEIGENSCHAFTEN
PRODUITS LAITIERS DE CULTURE AYANT D'EXCELLENTES CARACTÉRISTIQUES DE CONGÉLATION/DÉCONGÉLATION

(30) Priority: 08.10.2012 US 201261710819 P
(43) Date of publication of application: 12.08.2015
(60) Divisional application: 18209995.2
(73) Proprietor: General Mills, Inc., Minneapolis, Minnesota 55440 (US)
(72) Inventor: ALCANTAR, Paula B., Maple Grove, Minnesota 55311 (US); BARRAGAN-PEREZ, Katya, Maple Grove, Minnesota 55311 (US); MCGUIRE, James E., Crystal, Minnesota 55422 (US); MURPHY, Maeve, Plymouth, Minnesota 55441 (US); YUNGER, Greg J., Champlin, Minnesota 55316 (US)
(74) Representative: Vossius & Partner Patentanwälte Rechtsanwälte mbB
(86) International application number: PCT/US2013/063871
(87) International publication number: WO 2014/058873

(56) References cited:
- WO-A1-2006/089239
- US-A- 4 500 553
- US-A1- 2007 098 868
- US-A1- 2008 131 575
- US-A1- 2008 292 773
- US-A1- 2010 086 663
- US-A1- 2011 287 147
- US-A1- 2011 287 147
- US-A1- 2012 052 160

## Description

### FIELD OF THE INVENTION

The present invention relates to cultured dairy products. More specifically, this invention relates to cultured dairy bar products having excellent freeze/thaw properties.

### BACKGROUND OF THE INVENTION

Fermented dairy products, such as yogurt, typically refer to compositions produced by culturing (fermenting) one or more dairy ingredients, also sometimes referred to as a dairy base, with a bacterial culture that contains the lactic acid-producing bacteria, such as Lactobacillus bulgaricus and/or Streptococcus thermophilus. Such products are available in a wide variety of styles and formulations.

For example, U.S. Pat. No. 4,971,810 (Hoyda et al.) discloses fiber fortified yogurt products; U.S. Pat. No. 4,952,414 (Kaufman et al.) discloses yogurt with cereal pieces; U.S. Pat. No. 6,235,320 (Daravingas et al.) discloses multi-layered, colored yogurt products; U.S. Pat. No. 7,033,634 (Engesser et al.) discloses aerated or whipped yogurt products and describes that a hydrated emulsifier blend can be added to a cultured yogurt post fermentation; U.S. Pub. No. 2005/0255192 (Chaudhry et al.) discloses a method for making cultured dairy products with decreased fermentation times; and U.S. Patent Application US 2007/0178213 titled "NOVEL AERATED MILK COMPOSITIONS," filed Feb. 1, 2006, by Ketchmark et al., and U.S. Ser. No. 11/324,550 discloses aerated milk compositions such as yogurt.

Additionally, frozen yogurt products are available in the marketplace that can be consumed with the hands, such as Yoplait® parfait bites product and various frozen yogurt novelties.

Consumers enjoy convenient, portable ways to eat healthful products such as yogurt, without the need to use a spoon. An example of such a product is Go-GURT® Portable Lowfat Yogurt, which is a yogurt product provided in a tube for portable consumption. U.S. Patent Application Publication No. 2008/0089991 describes gelled food products such as yogurt or pudding products that are hand-holdable. These products contain a hydrocolloid ingredient that is present in an amount such that the gelled dairy composition has a Gel Strength Value of at least 100 grams. See claim 1 of the published application.

Confectionery products comprising a high water activity component such as yogurt are described in U.S. Patent Application Publication No. 2008/0050484. This application notes the problem of dissolution of the moisture sensitive confectionery materials by the high water activity components, and states that this can be prevented by use of moisture barriers. In the described method, the shell is first molded, a moisture barrier is deposited onto the shell, and then the high water activity material is deposited into the molded shell. See paragraphs [0030] - [0034]. An alternative enrobing process whereby the high water activity material is first formed into a desired shape and subsequently hermetically covered with at least one layer of low water activity material is described. The application states that "[f]orming of the high water activity material may involve a set time, or cooling step in order to give the material a consistency appropriate for cutting resp. enrobing and coating." See paragraph [0044].

Patent application EP1378174A1 describes a high water food product with an edible casing containing a moist filling, which is preferably a yogurt based filling. The described product is prepared by first forming the casing, then pouring a liquid or viscous filling material into the casing, and then sealing the casing. See paragraph [0019]. US Patent No. 5,573,793 to Saintain describes a cookie or chocolate shell food product having a filling based on a dairy product. The filling is fermented and contains live lactic acid bacteria. The filling has a water activity of between 0.75 and 0.81.

U.S. Patent Application Publication No. 2011/0287147 describes refrigerated yogurt products of small size suitable for eating with the fingers that are prepared by providing a frozen yogurt composition in individual serving portions and coating the frozen yogurt portions with a fat based coating that is a solid at 45°F., thereby completely enveloping the frozen yogurt portions. The coated frozen yogurt portion is allowed to thaw to form a refrigerated yogurt product.

There is a continuing need to provide new and improved cultured dairy products, especially having characteristics that are appealing to consumers.

### SUMMARY OF THE INVENTION

Cultured dairy bar products are prepared using a method as described in the present claims 1-3. In the method, a cultured dairy composition is provided having the following characteristics:
i) total solids content of at least 22% by weight of the cultured dairy composition and a milk solids content of greater than 38 wt% based on total solids content,
ii) a gelatin content of from 0.7 to 1.5 % by weight of the cultured dairy composition, and
iii) a viscosity of greater than 200,000 mPa•s (200,000 cP) to 700,000 mPa•s (700,000 cP) at 4°C.

This cultured dairy composition is frozen to form frozen cultured dairy portions. The frozen cultured dairy portions are coated with a fat-based coating composition comprising from 20 to 80% fat by weight of the fat-based coating composition. The fat-based coating composition is a solid at 7.2°C (45°F). The fat-based coating composition is applied to the frozen cultured dairy portion to completely envelope the frozen cultured dairy portions, forming a frozen cultured dairy bar product. The thus formed cultured dairy bar product is stored at a temperature at or below 7.2°C (45°F).

In a preferred embodiment, the frozen cultured dairy bar product is allowed to thaw to form a refrigerated cultured dairy bar product, and is stored at a temperature of from 0°C (32°F) to 7.2°C (45°F).

The present cultured dairy bar product provides an excellent healthful snack alternative to other food snack choices, with the additional advantage of portability of product and ease of eating a real cultured dairy-based product without the need to use utensils. The thus produced cultured dairy bar product exhibits excellent freeze/thaw properties, and provides a product having excellent organoleptic characteristics whether eaten as a frozen product or a refrigerated product, even if the product is accidentally cycled through one, two or more freeze/thaw cycles. It has been discovered that cultured dairy bar products of the present invention exhibit superior stability characteristics through such temperature and physical state cycles. Preferably, the cultured dairy portion of the cultured dairy bar product does not exhibit syneresis as determined by naked eye visible inspection. Preferably, the coating of the cultured dairy bar product does not exhibit compromise of integrity when held at 7.2°C (45°F) for 30 days. For purposes of the present invention, a product is considered to exhibit compromise of integrity if moisture is transferred from the cultured dairy composition to the outside of the coating to a degree that excess moisture is visible to the naked eye outside of the coating. The integrity of the coating over long refrigeration times is important for shelf life considerations. While not being bound by theory, it is believed that selection of the cultured dairy composition, to minimize syneresis, the manufacturing process and selection of the coating composition to withstand moisture migration challenges act in combination to afford superior shelf life properties, particularly under refrigeration conditions.

### BRIEF DESCRIPTION OF THE DRAWINGS

The accompanying drawings, which are incorporated in and constitute a part of this application, illustrate several aspects of the invention and together with a description of the embodiments serve to explain the principles of the invention. A brief description of the drawings is as follows:
FIG. 1 is a flowchart of a process for manufacture of the cultured dairy bar product of the present invention.
FIG. 2 is a flowchart of an alternative process for manufacture of the cultured dairy bar product of the present invention.

### DETAILED DESCRIPTION OF PRESENTLY PREFERRED EMBODIMENTS

The embodiments of the present invention described below are not intended to be exhaustive or to limit the invention to the precise forms disclosed in the following detailed description. Rather a purpose of the embodiments chosen and described is so that the appreciation and understanding by others skilled in the art of the principles and practices of the present invention can be facilitated.

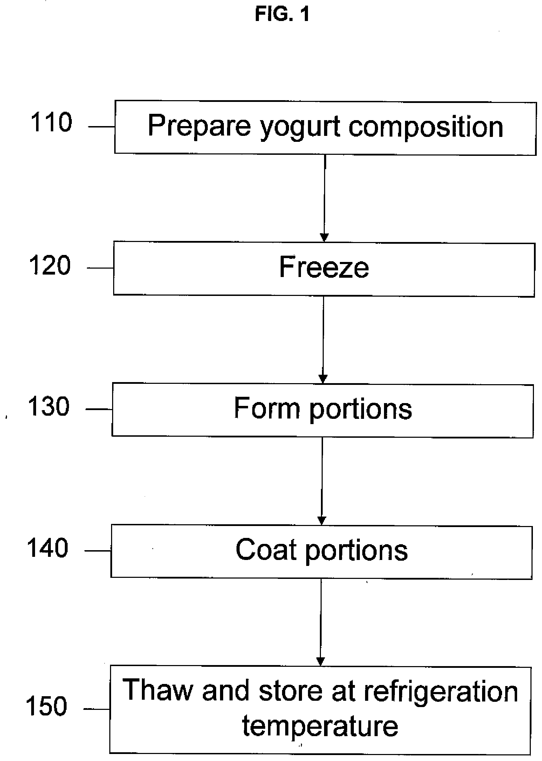

Turning now to Fig. 1, an embodiment of the process for manufacture of the cultured dairy bar product of the present invention is shown as a flowchart. In the first step 110, a cultured dairy composition is prepared.

In a particularly preferred embodiment, the cultured dairy product of the present invention is a yogurt product. As used herein, the term "yogurt" includes, but is not limited to, all of those food products meeting the definition as set forth in the U.S. Food and Drug Administration Code of Federal Regulations (CFR) Title 21 Section 131.200, 131.203, and 131.206.

In general, the cultured dairy can be made from a fermentable dairy base and bacterial culture. In addition, a cultured dairy composition may include a gel-forming hydrocolloid component and, optionally, one or more additives.

Dairy bases for making a cultured dairy are well known and are described in, e.g., U.S. Pat. Nos. 4,971,810 (Hoyda et al.); 5,820,903 (Fleury et al.); 6,235,320 (Daravingas et al.); 6,399,122 (Vandeweghe et al.); 6,740,344 (Murphy et al.); and U.S. Pub. No. 2005/0255192 (Chaudhry et al.). In general, a dairy base includes at least one fermentable dairy ingredient. A fermentable dairy ingredient can include raw milk or a combination of whole milk, skim milk, condensed milk, dry milk (for example, dry milk solids non-fat, or MSNF). Preferably, the fermentable dairy ingredient is composed of bovine milk. However, if desired other milks can be used as a partial or whole substitute for bovine milk, such as camel, goat, sheep or equine milk. The fermentable dairy ingredient may also comprise grade A whey, cream, and/or such other milk fraction ingredients as buttermilk, whey, lactose, lactalbumins, lactoglobulins, or whey modified by partial or complete removal of lactose and/or minerals, and/or other dairy ingredients to increase the nonfat solids content, which are blended to provide the desired fat and solids content. If desired, the dairy base can include a filled milk component, such as a milk ingredient having a portion supplied by a non-milk ingredient (for example, oil or soybean milk).

In exemplary embodiments, a cultured dairy composition of the refrigerated cultured dairy product has a fat content in the range of from 0 to 12 weight percent based on the total weight of the cultured dairy composition. With respect to exemplary embodiments of the refrigerated cultured dairy product, the fat content is in the range of from 0.5 to 10 weight percent, preferably from 0.5 to 5 weight percent, from 0.5 to 3 weight percent, and even more preferably about 1% weight percent based on the total weight of the cultured dairy composition. In an embodiment of the present invention, the cultured dairy composition has a fat content of at least 1%.

In embodiments of the present invention, the refrigerated cultured dairy product has a total solids content of at least 22% and a milk solids content of greater than 38 weight percent based on total solids content, and has fat content of from 0.5% to 3% and soluble solids content (sucrose and lactose) of from 9 to 13%. In an embodiment, the cultured dairy composition of the refrigerated cultured dairy product comprises from 50% to 80% milk solids. This formula is fermented and used without a concentration step.

In another embodiment of the present invention, the refrigerated cultured dairy product has a total solids content of from 24% to 35%, with milk solids being from 50 to 70% of the total solids, soluble solids content of from 7 to 11%, and fat content of from 1 to 4%. This formula is also fermented and used without a concentration step.

In another embodiment of the present invention, the cultured dairy is prepared and fermented, with a subsequent concentration step after fermentation. In an embodiment, a finished filling (after concentration step) is provided with total solids content of from 40 to 60%, with milk solids being from 30 to 50% of the total solids, fat content of from 1 to 3% and the soluble solids of from 10 to 14%.

The cultured dairy composition has a protein content of from 5 to 10% by weight. The protein content of the cultured dairy composition can be directly measured, or can be calculated based on all components present in the cultured dairy, including milk solids, whey protein concentrate and nonfat dry milk.

In an embodiment, the cultured dairy composition has a gelatin content of from 0.7 to 1.5 % by weight of the cultured dairy composition. In another embodiment of the present invention, the cultured dairy composition has a gelatin content of from 0.9 to 1.3 % by weight of the cultured dairy composition.

The gelatin, when present, may be selected from any gelatin, such as a bovine, porcine, or piscine gelatin. In an embodiment of the present invention, the gelatin is selected from bovine gelatin having a bloom strength in the range of from 200 to 300. In an embodiment of the present invention, the gelatin is selected from bovine gelatin having a bloom strength in the range of from 220 to 250. In another embodiment, the gelatin is selected from Type B bovine gelatin having a bloom strength in the range of from 220 to 250.

In an embodiment of the present invention, the cultured dairy composition has a pregelatinized starch content of from 0.15 to 0.4 % by weight of the cultured dairy composition. In an embodiment of the present invention, the cultured dairy composition has a pregelatinized starch content of from 0.2 to 0.3 % by weight of the cultured dairy composition.

For purposes of the present invention, a starch can be identified as being pregelatinized based on its water solubility at 20°C. (68°F). While ungelatinized starch is insoluble in water at 20°C. (68°F), gelatinized starch is water soluble. Thus, a 5 gram sample of gelatinized starch mixed in 100 ml water has no visible insoluble components. Ungelatinized starch is gelatinized by heating the starch granules in the presence of water, or alternatively exposing the starch to water together with a catalyst (such as acid) or enzyme, under conditions that disrupt the amorphous regions of the starch granule, and permit hydrogen bonding between starch and water molecules. The granules are then able to absorb water and swell, thereby putting increasingly greater stress on the crystalline regions. Within a certain range of temperatures, the characteristic of each starch suddenly loses all organized structure and becomes an amorphous network of starch and water intermingled. This is called the gelatinization range, because the granules become tiny gels, or liquid-containing meshworks of long molecules. This range is between 60-64°C (140-148°F) for wheat flour,- and between 62 and 70°C (144 and 158°F) for corn starch. Both flour and cornstarch are produced from seeds. Other sources of starch exist which include rice starch and root starches such as arrowroot, tapioca, and potato to name a few. These starches tend to gelatinize at lower temperatures than the seed starches.

While not being bound by theory, it is believed that the present formulation of the cultured dairy composition, and most advantageously in the embodiment comprising the combination of gelatin and pregelatinized starch as described herein, provides a cultured dairy product having the desired viscosity resulting in an excellent cultured dairy bar as a healthful snack with good organoleptic characteristics. In particular, the cultured dairy bar exhibits excellent viscosity and density characteristics, while not having a "gummy" or "sticky texture.

Optionally, the dairy bases may include sweeteners, flavor ingredient(s), process viscosity modifier(s), vitamin(s), nutrient(s), combinations of these, and the like. Other ingredients that may be included are gel-forming additives, stabilizers, sequestrants, etc.

Examples of suitable sweeteners include one or more nutritive carbohydrate sweetening agents. Exemplary nutritive sweetening agents include, but are not limited to, sucrose, liquid sucrose, high fructose corn syrup, dextrose, liquid dextrose, various DE corn syrups, corn syrup solids, beet or cane sugar, invert sugar (in paste or syrup form), brown sugar, refiner's syrup, molasses, fructose, fructose syrup, maltose, maltose syrup, dried maltose syrup, malt extract, dried malt extract, malt syrup, dried malt syrup, honey, maple sugar, and mixtures thereof. In some embodiments, particularly in low fat and/or low calorie variations, the dairy base can comprise a high potency non-nutritive carbohydrate sweetening agent. Exemplary high potency sweetening agents include aspartame, sucralose, acesulfame potassium, saccharin, cyclamates, thaumatin, tagatose, rebaudioside, stevia, and mixtures thereof. In exemplary embodiments, the sweetener is typically present in an amount of from 0 to 20 weight percent, preferably 12 to 17 weight percent based on the total weight of the cultured dairy composition.

In exemplary embodiments, a process viscosity modifier can be present in an amount of from 0.5 to 3 weight percent, preferably 1 to 2 weight percent based on the total weight of the cultured dairy composition. An exemplary process viscosity modifier can be commercially obtained from National Starch (Bridgewater, NJ) under the tradename THERMTEX®. In embodiments of the present invention, the cultured dairy composition can contain 0 to 3% starch, and 0 to 0.5% LM pectin. An exemplary non-dairy, gel-forming hydrocolloid ingredient for use in the present invention can include agar, alginate, carrageenan, pectin, starch, xanthan/locust bean gum blend, gellan gum, konjac gum, and combinations thereof. It is noted that some gel-forming hydrocolloid ingredients can have structural modifications that can influence the gel-forming ability of other hydrocolloids. Examples of useful stabilizers and thickeners such as pectin, agar, carrageenan, gellan gum, xanthan gum, carboxy methyl cellulose (CMC), sodium alginate, hydroxy propyl, methyl cellulose, and mixtures thereof.

When included, stabilizers or thickeners can be included in an amount sufficient to provide a desired viscosity to the cultured dairy composition, such that the cultured dairy composition can be processed (e.g., pumped) through equipment during formulation of the inventive compositions. Additionally, stabilizers can be provided to assist in providing freeze/thaw stability to the cultured dairy composition.

Any bacterial culture useful in making cultured dairy compositions for consumption can be used with the dairy base composition. Such bacterial culture(s) are live and active and are well known. An exemplary bacterial culture can include any microorganism suitable for lactic fermentation such as *Lactobacillus sp., Streptococcus sp.,* combinations of these, and the like. More specifically, a bacterial culture can include *Lactobacillus delbrueckii* subspecies *bulgaricus, Streptococcus thermophilus, Streptococcus salivarius* ssp *thermophilus, Lactobacillus lactis, Lactobacillus casei, Lactobacillus acidophilus, Bifidobacterium lactis, Bifodobacterium bifidus, Lactococcus cremoris, Lactococcus lactis, Lactococcus lactis ss diacetylactis,* combinations of these, and the like. A variety of synonyms exist for the term "bacterial culture." These synonyms include, for example, live culture, active culture, live and active culture, starter culture, and the like.

The cultured dairy composition is formulated so that the composition of the final refrigerated cultured dairy product has a viscosity of greater than 200,000 mPa•s (200,000 cP) to 700,000 mPa•s (700,000 cP) at 4°C. In an embodiment of the present invention, the final viscosity of the cultured dairy composition of the refrigerated cultured dairy product is from 300,000 to 500,000 mPa•s (300,000 to 500,000 cP) at 4°C. In embodiments of the present invention, the cultured dairy composition may be a whipped or gelled cultured dairy composition provided that the cultured dairy composition is sufficiently stabilized to maintain its texture once frozen and thawed.

Viscosity is determined using a Brookfield viscometer model DV-II+, equipped with a helipath T-bar spindle, size F with a lowering vertical motion. The viscosity is determined at 4°C, wherein the spindle operates for 30 seconds at 10 rpm.

In an embodiment of the invention, viscosity of the cultured dairy composition may be maintained at a first low viscosity (e.g. below 300,000 mPa•s (300,000 cP) at 4°C., more preferably below 120,000 mPa•s (120,000 cP) at 4°C) during certain production steps particularly requiring good mixing of ingredients or transfer from one vessel to another, and then allowed to build in viscosity (e.g. by addition of viscosity increasing ingredients) later in the process, such as immediately prior to freezing of the cultured dairy composition.

In embodiments of the present invention, the cultured dairy composition has a pH in the range of 4.35 to 4.85, preferably from 4.5 to 4.7, and most preferably about 4.60.

Optionally, the cultured dairy composition can further include a variety of adjuvant materials to modify the nutritional, organoleptic, flavor, color, or other properties of the composition. For example, the cultured dairy composition can additionally include synthetic and/or natural flavorings, and/or coloring agents can be used in the compositions of the invention. Any flavors typically included in cultured dairy compositions can be used in accordance with the teachings of the invention. Also, flavor materials and particulates, such as fruit and fruit extracts, nuts, chips, and the like, can be added to the cultured dairy compositions as desired. The flavoring agents can be used in amounts in the range of 0.01 to 3%. Coloring agents can be used in amounts in the range of 0.01 to 0.2% (all percentages based upon total weight of the cultured dairy composition).

When included, fruit and fruit extracts (e.g., sauces or purees) can comprise 1% to 40%, preferably from 5% to 15% of the cultured dairy composition. The fruit component can be admixed with the emulsifier prior to addition to the first dairy base, or can be added as a separate component, as desired.

The thus provided cultured dairy composition is frozen in freezing step 120, whereby the cultured dairy composition is to form a frozen composition. Preferably, the cultured dairy composition is frozen under conditions to provide an average ice crystal size of less than 55µm. The skilled artisan in the frozen dessert art is aware of such conditions, including fast freezing with agitation or scraping to maintain a small ice crystal size. In a preferred embodiment, the cultured dairy composition is frozen by using a continuous freezer barrel system comprising a dasher and scraper blades, such as is conventionally used to prepare ice cream. The continuous freezer barrel system is particularly advantageous because it can prepare large quantities of frozen cultured dairy product meeting the crystal size specification noted above in an efficient manner. The frozen cultured dairy product can be thus produced and immediately shaped to form portions according to step 130 by an extrusion and cutting process, optionally onto a conveyor belt for delivery to a coating station. Optionally, the frozen cultured dairy product can be thus prepared and cut or formed mechanically into suitable sizes and shapes by cutting and forming apparatus, or by delivery of the frozen or a semi-frozen cultured dairy into a form for further freezing or hardening.

The cultured dairy portions may be formed into any appropriate size and shape, preferably for single servings of the cultured dairy bar product as a healthful snack. Examples of preferred portion sizes are from about 20 grams to about 90 grams of cultured dairy portion. Examples of preferred portion shapes are in cubic, rectangular prism, triangular prism, cylinder, pyramidal (both truncated and regular), and non-regular three-dimensional forms. Most preferably, the cultured dairy portions are provided in the shape of a rectangular prism, approximating the dimension of standard candy bars for ease of consumption.

Optionally the cultured dairy portion is placed in a cold environment, such as a blast freezer, to lower the temperature to assist in retaining the shape of the portion for a time sufficient to be coated. In an embodiment of the present invention, the temperature of the cultured dairy composition is lowered to a temperature of from -23°C to -26°C (-10°F to -15°F).

In embodiments wherein the cultured dairy composition is at first only partially frozen, a portion of the cultured dairy composition may be manipulated during the further freezing process, e.g. by being deposited on a moving belt and allowed to roll, to provide the desired shape.

The formed portions of the cultured dairy composition are then coated using a fat-based coating composition in coating step 140 to completely envelope the frozen cultured dairy portions to form a frozen cultured dairy bar product. The fat-based coating composition comprises at least 50% fat by weight of the fat-based coating composition. In an embodiment, the fat-based coating composition comprises from 5 to 65% sugar by weight of the fat-based coating composition. In another embodiment, the fat-based coating composition comprises from 5 to 20% sugar by weight of the fat-based coating composition. The fat-based coating composition is formulated so that it is a solid at 7.2°C (45°F). The fats of the coating composition preferably have an average melting point of from 27°C (80°F) to 38°C (100°F) in order to provide both the desired protective properties and also the desired mouth feel. In an embodiment of the present invention, the coating is not brittle (i.e. does not break when the consumer bites into the product). In another embodiment, the coating does not melt in the hand of the consumer under ordinary consumption conditions.

The coating composition properties optimally lead to minimal drip time, short setting time, and good adherence to the cultured dairy composition without cracks or other discontinuous areas in the coating. The set time should be short enough for efficient manufacture, but long enough to allow any optional additional particulates, such as granola or nut particles, to be applied before the coating solidifies. The coating also needs to provide a firm structure, which will both protect the thawed center and allow the product to be neatly consumed with one's hands. Finally, the coating should provide a pleasant taste and non-greasy texture in the mouth.

The coating composition for coating the frozen cultured dairy portion preferably is a fat based coating made mostly out of hydrogenated fat that is solid at room temperature. The coating serves to encase the cultured dairy filling. Preferably, the coating composition is formulated to keep any particulate inclusions in the coating, such as granola, crunchy. To keep the particulate inclusions crunchy, the coating compositions typically are made almost entirely of fat based ingredients (due to low water activity). The fat based coating would preferably be based on blends of lauric fats (such as coconut oil, palm kernel oil or fractionated coconut or palm kernel oil) and non-lauric fats, (such as cocoa butter, partially hydrogenated vegetable oil (from soybean, palm, cottonseed or rapeseed) or fractionated oils). The partially hydrogenated oils have the disadvantage of high trans fatty acid content, and therefore the fractionated oils are preferred for the non-lauric fat component. The optimum blend will have the desired brittleness provided by the lauric component, and the needed elasticity provided by the non-lauric component. Optionally, lower fat coatings may be used if it is not crucial to keep the outer coating/particulates crunchy or if the particulate is itself fat based. The coating can be made of various ingredients and levels of fat as long as it can be heated to form a liquid, is solid at refrigerated temperatures and can completely encase the cultured dairy composition. Flavor can optionally be added to the coating, including fruit (e.g. strawberry, blueberry and the like), caramel, peanut butter, chocolate or other flavors or mixtures thereof. In an embodiment of the present invention, the coating is made from chocolate.

In an embodiment of the present invention, the coating consists of fat, sugar, flavoring and an emulsifier. The fat content will be a mixture of liquid and solid fat. Solid fat content can be, for example, partially hydrogenated coconut oil, palm oil, fractionated palm oil, interesterified palm oil, cocoa butter, or other solid vegetable fats. Liquid fat content can be, for example, coconut oil, fractionated coconut oil, fractionated palm oil, or other vegetable oils.

Preferably the coating is completely liquid above 49°C (120°F), yet solidifies quickly (less than 3 seconds) after coating onto the frozen cultured dairy portion. In an embodiment of the present invention, the fat based coating comprises 20-80% of fat that is liquid at 22°C (72°F) and 20-80% of fat that is solid at 22°C (72°F). The fat based coating preferably exhibits an initial peak force value of 8.5 to 11.5 kg and a maximum peak force value of 9.5 to 14 kg, at 4° C. The peak force value for the finished, coated piece itself preferably ranges from 1 to 5 kg at 4° C. The fat coating preferably has crystalline melt characteristics of being completely liquid at 30 to 35° C, as measured by DSC. In embodiments with more coconut oil, the onset of melting was at 30° C, but increased to 35° C with higher palm kernel oil content.

In an embodiment of the present invention, the coating is applied in multiple applications. In another embodiment, the coating is applied as a first coating and a second coating, which first and second coatings may be the same or different from one another. In an embodiment, the first coating comprises particulate inclusions. Preferably, the first coating does not comprise particulate inclusions because such particulate inclusions may weaken the integrity of the coating, thereby leading to leakage of cultured dairy from the product after thawing, or to prevent migration of moisture through the coating composition. Thus, preferably the first coating composition is free of any visibly detectable undissolved particulate inclusions, including, for example granola pieces or even cocoa powder. The application of an optional second coating is preferred to provide further integrity and strength to the final product to prevent leakage of cultured dairy from the product after thawing.

In an embodiment, the second coating composition comprises particulate inclusions, such as pieces of granola, nuts, cookies, grain based particulates (such as cereal, graham, etc), chocolate, hard candy, seeds, toffee, caramel, fruit and the like and mixtures thereof. In addition, other nutrients and additives can be incorporated with the particulates for added health benefits.

The coating composition is applied to the frozen cultured dairy portion by any appropriate technique, such as by dipping the portion in the coating composition or spraying, brushing, or otherwise applying the coating composition to the frozen cultured dairy portion. Preferably, the coating (or coatings) is applied to form an overall coating layer in the cultured dairy bar product that is from 2.0 to 5 mm thick. Preferably the coating completely seals the cultured dairy portion so that cultured dairy cannot leak out of the final product after thawing.

In an embodiment, the cultured dairy bar product has a total weight (i.e, including the cultured dairy composition and the coating composition) of from 20 grams to 80 grams. In an embodiment, the fat-based coating composition and the cultured dairy composition are present in a weight ratio of from 1:5 to 1:3.

For better adhesion of the particulate inclusions and to provide more particulate inclusions on product surface, some of the particulate inclusions may optionally be stirred in to the outermost coating prior to dipping or otherwise applying the coating composition to the frozen cultured dairy portion. When the coating is applied to the frozen cultured dairy portion, the coating cools and thus begins to solidify. Generally, the coating is mostly solid by the time the cultured dairy portion is completely coated in particulate inclusions.

Optionally, additional particulates can be added to the outside of the outer coating of the cultured dairy product by applying particulate inclusions as described above to the unhardened coating material, e.g. by dredging the coated cultured dairy portion in the particulate inclusions.

The particulate inclusions on the outer surface of the refrigerated cultured dairy product in particular provide the product with a unique dual texture, as well as facilitating the status of the product as a "finger food" by keeping the consumers fingers dry. Larger particulates can be added to the coating composition itself as part of the second or subsequent coating composition, but the outer particulate coating is preferably of a finer grind for complete coverage of the product. Optionally, different particulates and coating compositions can be applied sequentially to the cultured dairy product to provide further flavor and texture experiences.

The cultured dairy bar product may be packaged for distribution in bulk, in multiple serving packages or as individual product.

In an embodiment, the cultured dairy product is maintained in the frozen state for shipping with instructions for allowing the product to thaw in step 150 at the point of purchase or consumption and for storage at refrigeration temperatures. Transport and storage in a "wholesale" environment in the frozen state provides advantages in product stability for handling purposes and potential shelf life benefits for an optimal freshness experience at the time of consumption.

In an alternative embodiment, the cultured dairy bar product is allowed to thaw in step 150 at the manufacturer's location or in transit, thereby saving in shipping costs by requiring only refrigeration rather than frozen shipping.

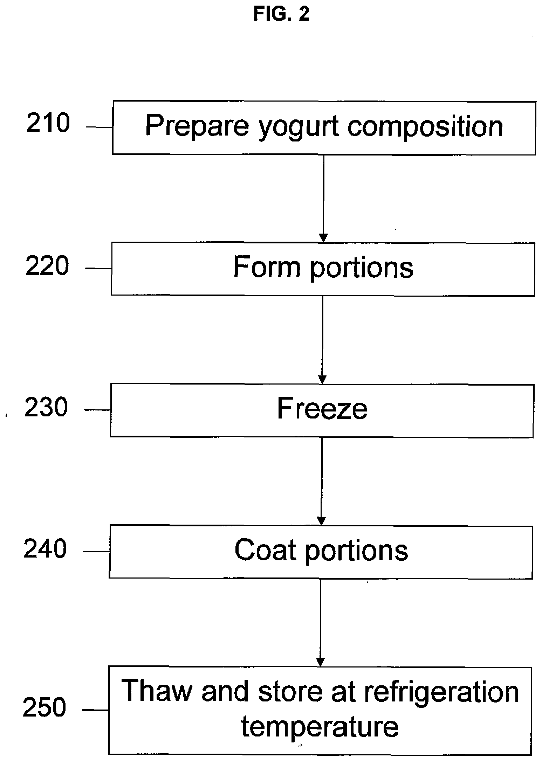

In an alternative process of the present method as shown in Fig. 2, the cultured dairy composition is prepared in step 210 and placed in forms or molds having a configuration to provide the cultured dairy composition in the desired portion shape and size in step 220 prior to freezing. The thus portioned cultured dairy composition is frozen in step 230 in a manner to form a frozen composition having an average ice crystal size that is preferably less than 55µm. As noted above, the skilled artisan, particularly in the ice cream art, will appreciate the various techniques that can be used to prevent undue ice crystal growth, such as one or more of fast freezing techniques and incorporation of fats, stabilizers and other ingredients that obstruct the growth of ice crystals to sizes larger than the desired average size.

For purposes of the present invention, the average size of ice crystals can be determined by preparing photomicrographs of the frozen product under conditions to retain the ice crystals. The photomicrograph is taken at an appropriate magnification (e.g. 100µm per cm), and a visual inspection of a representative portion of the micrograph (e.g., an 800µm by 500µm sample size) is undertaken to determine the size (in the longest visible dimension) of all visible crystals. The average size of all visible crystals is then determined. Optionally, determination of the average ice crystal size can be assisted by computer scan and automated evaluation using these same principles.

After freezing, the cultured dairy portion is coated in step 240 as described above.

In an embodiment, the cultured dairy product is maintained in the frozen state for shipping with instructions for allowing the product to thaw in step 250 at the point of purchase or consumption and for storage at refrigeration temperatures. Transport and storage in a "wholesale" environment in the frozen state provides advantages in product stability for handling purposes and potential shelf life benefits for an optimal freshness experience at the time of consumption.

In an alternative embodiment, the cultured dairy bar product is allowed to thaw in step 250 at the manufacturer's location or in transit, thereby saving in shipping costs by requiring only refrigeration rather than frozen shipping.

As noted above, the cultured dairy bar of the present invention can be consumed when frozen. In a preferred embodiment, the cultured dairy bar is not frozen, but is in the refrigerated state.

In the following embodiments of the present disclosure are summarized:
1. A method of preparing a cultured dairy bar product comprising:
   a) providing a cultured dairy composition having
      i) total solids content of at least 22% by weight of the cultured dairy composition and a milk solids content of greaterthan 38 wt% based on total solids content,
      ii) a gelatin content of from 0.7 to 1.5 % by weight of the cultured dairy composition, and
      iii) a viscosity of from 200,000 mPa•s (200,000 cP) to 700,000 mPa•s (700,000 cP) at 4°C;
   b) freezing the cultured dairy composition to form frozen cultured dairy portions;
   c) coating the frozen cultured dairy portions with a fat-based coating composition comprising from 20 to 80% fat by weight of the fet-based coating composition, the fat-based coating composition being a solid at 7.2°C (45°F), thereby completely enveloping the frozen cultured dairy portions to form a frozen cultured dairy bar product; and
   d) storing the cultured dairy bar product at a temperature at or below 7.2°C (45°F).
2. The method of item 1, further comprising the steps of
   e) allowing the frozen cultured dairy bar product to thaw to form a refrigerated cultured dairy bar product; and
   f) storing the refrigerated cultured dairy bar product at a temperature of from 0°C (32°F) to 7.2°C (45°F).
3. The method of item 1, wherein the cultured dairy composition comprises a pregelatinized starch content of from 0.15 to 0.4 % by weight of the cultured dairy composition.
4. The method of item 1, wherein the cultured dairy composition is frozen by a continuous freezer barrel system comprising a dasher and scraper blades.
5. The method of item 1, wherein the cultured dairy composition has a protein content of from 5 to 10% by weight,
6. The method of item 1, wherein the cultured dairy composition has a fat content of at least 1%.
7. The method of item 1, wherein the cultured dairy composition has a gelatin content of from 0.9 to 1.3 % by weight of the cultured dairy composition
8. The method of item 1, wherein the cultured dairy composition has a pregelatinized starch content of from 0.2 to 0.3 % by weight of the cultured dairy composition;
9. The method of item 1, wherein the cultured dairy bar product has a total weight of from 20 grams to 80 grams.
10. The method of item 1, wherein the fat-based coating composition and the cultured dairy composition are present in a weight ratio of from 1:5 to 1:3.
11. The method of item 1, wherein the fat-based coating composition comprises from 5 to 65% sugar by weight of the fat-based coating composition.
12. The method of item 1, wherein the fat-based coating composition comprises from 5 to 20% sugar by weight of the fat-based coating composition.
13. The method of item 1, wherein the cultured dairy composition is a yogurt composition.
14. The product made by the process of item 1.
15. A refrigerated or frozen cultured dairy bar product, comprising
   a) a cultured dairy composition having
      i) total solids content of at least 22% by weight of the cultured dairy composition and a milk solids content of greater than 38 wt% based on total solids content,
      ii) a gelatin content of from 0.7 to 1.5 % by weight of the cultured dairy composition, and
      iii) a viscosity of from 200,000 mPa•s (200,000 cP) to 700,000 mPa•s (700,000 cP) at 4°C;
   b) the cultured dairy composition being in the form of cultured dairy portions completely enveloped by a fat-based coating composition comprising from 20 to 80% fat by weight of the fat-based coating composition, the fat-based coating composition being a solid at 7.2°C (45°F);
   wherein the cultured dairy bar product is at a temperature at or below 7.2°C (45°F).
16. The cultured dairy bar product of item 1, wherein a cultured dairy composition comprises a pregelatinized starch content of from 0.15 to 0.4 % by weight of the cultured dairy composition.
17. The cultured dairy bar product of item 1, wherein the cultured dairy bar product is at a temperature of from 0°C (32°F) to 7.2°C (45°F).
18. The cultured dairy bar product of item 1, wherein the product does not exhibit syneresis after two freeze/thaw cycles.

### EXAMPLES

Representative embodiments of the present invention will now be described with reference to the following examples that illustrate the principles and practice of the present invention.

### A. Cultured dairy preparation.

Exemplary cultured dairy compositions that are yogurt compositions of the present refrigerated cultured dairy product are created following this general process:
Milk and other ingredients are blended to mix and hydrate any powders. Then the blend is heated to 71°C (160°F), homogenized at 69 bar (1000 psi), heated to 91°C (195°F), held for 9 minutes, and cooled to 43°C (110°F). Yogurt culture (Streptococcus thermophilus and Lactobacillus bulgaricus) is added, as well as any adjunct cultures (such as Lactobacillus acidophilus, Bifidobacterium bifidus, etc.), and product is fermented until the pH drops from the natural pH of the milk (about 6.5) to about pH 4.5. Product is then cooled. For strained yogurt, the finished product is separated by mechanical means (centrifugal separator or ultrafiltration) to concentrate the product before it is completely cooled after fermentation.

Representative yogurt compositions are as follows:

| | Example A | Example B | Example C |
|---|---|---|---|
| Water | 62.81% | 69.56% | 65.32% |
| Nonfat Dry Milk | 11.69% | 11.90% | 11.75% |
| Cream | 7.13% | 3.38% | 4.12% |
| Sugar | 7.00% | 7.00% | 6% |
| Gelatin | 1.10% | 1.40% | 1.30% |
| MPC 70 | 5.00% | 2.50% | 5% |
| Pregel starch | 0.25% | 0.25% | 0.00% |
| WPC 80 | 5.00% | 1.50% | 6% |
| Starch - Thermtex | 0.00% | 2.50% | 0.50% |
| Vitamin A Acetatate | 0.005776% | 0.005776% | 0.01% |
| Vitamin D3 | 0.001204% | 0.001204% | 0.00% |

Wherein:
- MPC 70 is a protein source commercially available from Idaho Milk Products as IdaPro Milk Protein Concentrate 70. MPC 70 manufactured from fresh pasteurized skim milk using a low-heat membrane filtration process to ensure that the protein is undenatured and remains highly functional and nutritional.
- WPC 80 is a whey protein concentrate obtained by removing sufficient non-protein constituents from pasteurized whey so that the finished dry product contains more than 80% protein.
- THERMTEX® starch (hydroxypropyl distarch phosphate: iNS No, 1442), commercially available from National Starch LLC, USA.

### B. Coated product preparation

The thus provided cultured dairy composition is poured in to molds to form frozen cultured dairy portions of size of 76.2 mm (1) x 25.4 mm (w) x 25.4 mm (h) (3 in (1) x 1 in (w) x 1 in (h)), and having a
weight of 50 g. After freezing, the frozen cultured dairy portions are coated with a fat-based coating composition by dipping the portion twice in a composition, the composition being at a temperature of about 21°C (70°F).

The fat-based coating has a composition as follows:
Sugar: 50%
Palm kernel oil / coconut oil: 45%
Yogurt powder 2%
Color 1%
Soy lecithin 1%
Salt 1%

The resulting coating has a thickness of about 3mm and completely envelopes the frozen cultured dairy portions to form a frozen cultured dairy bar product.

The frozen dairy bar product is stored at a temperature at or below 7.2°C 45°F).

Unless otherwise indicated, all parts and percentages are by weight and all molecular weights are weight average molecular weights. The foregoing detailed description has been given for clarity of understanding only. No unnecessary limitations are to be understood therefrom. The invention is not limited to the exact details shown and described, for variations obvious to one skilled in the art will be included within the invention defined by the claims.

## Claims

1. A method of preparing a cultured dairy bar product comprising:
a) providing a cultured dairy composition having
i) total solids content of at least 22 % by weight of the cultured dairy composition and a milk solids content of greater than 38 wt% based on total solids content,
ii) a gelatin content of from 0.7 to 1.5 % by weight of the cultured dairy composition, and
iii) a viscosity of from 200,000 mPa•s (200,000 cP) to 700,000 mPa•s (700,000 cP) as determined using a Brookfield viscometer model DV-II+, equipped with a helipath T-bar spindle, size F with a lowering vertical motion at 4 °C, wherein the spindle operates for 30 seconds at 10 rpm;
b) freezing the cultured dairy composition to form frozen cultured dairy portions;
c) coating the frozen cultured dairy portions with a fat-based coating composition comprising from 20 to 80 % fat by weight of the fat-based coating composition, the fat-based coating composition being a solid at 7.2 °C(45 °F), thereby completely enveloping the frozen cultured dairy portions to form a frozen cultured dairy bar product; and
d) storing the cultured dairy bar product at a temperature at or below 7.2 °C(45 °F).

2. The method of claim 1, further comprising the steps of
e) allowing the frozen cultured dairy bar product to thaw to form a refrigerated cultured dairy bar product; and
f) storing the refrigerated cultured dairy bar product at a temperature of from 0 °C(32 °F) to 7.2 °C(45 °F).

3. The method of claim 1, wherein the fat-based coating composition and the cultured dairy composition are present in a weight ratio of from 1:5 to 1:3.

4. A frozen cultured dairy bar product, comprising a cultured dairy composition having
a) total solids content of at least 22 % by weight of the cultured dairy composition and a milk solids content of greater than 38 wt% based on total solids content,
b) a gelatin content of from 0.7 to 1.5 % by weight of the cultured dairy composition,
c) a pregelatinized starch content of from 0.15 % to 0.4 % by weight of the cultured dairy composition, and
d) a viscosity of from 300,000 mPa•s (300,000 cP) to 700,000 mPa•s (700,000 cP) as determined using a Brookfield viscometer model DV-II+, equipped with a helipath T-bar spindle, size F with a lowering vertical motion at 4 °C, wherein the spindle operates for 30 seconds at 10 rpm.

5. The cultured dairy bar product of claim 4, wherein the cultured dairy composition has a gelatin content of from 0.9 to 1.3% by weight of the cultured dairy composition.

6. The cultured dairy bar product of claim 4, wherein the cultured dairy composition has a pregelatinized starch content of from 0.2 to 0.3 % by weight of the cultured dairy composition.

7. The cultured dairy bar product of claim 4,
wherein the cultured dairy composition further comprises a process viscosity modifier in an amount of from 0.5 % to 3 % by weight of the cultured dairy composition.

8. The cultured dairy bar product of claim 7, wherein the process viscosity modifier is selected from the group consisting of agar, alginate, carrageenan, pectin, starch, xanthan/locust bean gum blend, gellan gum, konjac gum, combinations thereof.

9. The cultured dairy bar product of claim 4, further comprising a fat-based coating composition enveloping the cultured dairy composition, the fat-based coating composition comprising from 20 to 80 % fat by weight of the fat-based coating composition, and being a solid at 7.2 °C(45 °F).

10. A refrigerated or frozen cultured dairy bar product, comprising
a) a cultured dairy composition having
i) total solids content of at least 22 % by weight of the cultured dairy composition and a milk solids content of greater than 38 wt% based on total solids content,
ii) a gelatin content of from 0.7 to 1.5 % by weight of the cultured dairy composition, and
iii) a viscosity of from 200,000 mPa•s (200,000 cP) to 700,000 mPa•s (700,000 cP) as determined using a Brookfield viscometer model DV-II+, equipped with a helipath T-bar spindle, size F with a lowering vertical motion at 4 °C, wherein the spindle operates for 30 seconds at 10 rpm;
b) the cultured dairy composition being in the form of cultured dairy portions completely enveloped by a fat-based coating composition comprising from 20 to 80 % fat by weight of the fat-based coating composition, the fat-based coating composition being a solid at 7.2 °C(45 °F);
wherein the cultured dairy bar product is at a temperature at or below 7.2 °C(45 °F).

11. The cultured dairy bar product of claim 4 or 10, wherein a cultured dairy composition comprises a pregelatinized starch content of from 0.15 to 0.4 % by weight of the cultured dairy composition.

12. The cultured dairy bar product of claim 4 or 10, wherein the cultured dairy bar product is at a temperature of from 0 °C(32 °F) to 7.2 °C(45 °F).

13. The cultured dairy bar product of claim 4 or 10, wherein the product does not exhibit syneresis after two freeze/thaw cycles.

## Patentansprüche

1. Verfahren zur Herstellung eines Riegelprodukts aus einem fermentierten Milcherzeugnis, umfassend:
a) Bereitstellen einer Zusammensetzung eines fermentierten Milcherzeugnisses mit
i) einem Gesamtfeststoffgehalt von mindestens 22 Gew.-% der Zusammensetzung eines fermentierten Milcherzeugnisses und einem Milchfeststoffgehalt von mehr als 38 Gew.-%, bezogen auf den Gesamtfeststoffgehalt,
ii) einem Gelatinegehalt von 0,7 bis 1,5 Gew.-% der Zusammensetzung eines fermentierten Milcherzeugnisses und
iii) einer Viskosität von 200.000 mPa•s (200.000 cP) bis 700.000 mPa•s (700.000 cP), wie bestimmt unter Verwendung eines Brookfield-Viskosimeters Modell DV-II+, ausgestattet mit einer Helipath-T-Bar-Spindel, Größe F, mit einer absenkenden senkrechten Bewegung bei 4 °C, wobei die Spindel 30 Sekunden bei 10 U/min betrieben wird;
b) Einfrieren der Zusammensetzung eines fermentierten Milcherzeugnisses, um gefrorene Portionen aus fermentiertem Milcherzeugnis zu erhalten;
c) Beschichten der gefrorenen Portionen aus fermentiertem Milcherzeugnis mit einer Beschichtungszusammensetzung auf Fettbasis, die von 20 bis 80 Gew.-% Fett, bezogen auf die Beschichtungszusammensetzung auf Fettbasis, umfasst, wobei die Beschichtungszusammensetzung auf Fettbasis bei 7,2 °C (45 °F) ein Feststoff ist, um die gefrorenen Portionen aus fermentiertem Milcherzeugnis vollständig zu umhüllen, um ein gefrorenes Riegelprodukt aus einem fermentierten Milcherzeugnis zu erhalten; und
d) Aufbewahren des Riegelprodukts aus einem fermentierten Milcherzeugnis bei einer Temperatur bei oder unter 7,2 °C (45 °F).

2. Verfahren gemäß Anspruch 1, ferner umfassend die Schritte
e) Auftauenlassen des gefrorenen Riegelprodukts aus einem fermentierten Milcherzeugnis, um ein gekühltes Riegelprodukt aus einem fermentierten Milcherzeugnis zu erhalten; und
f) Aufbewahren des gekühlten Riegelprodukts aus einem fermentierten Milcherzeugnis bei einer Temperatur von 0 °C (32 °F) bis 7,2 °C (45 °F).

3. Verfahren gemäß Anspruch 1, wobei die Beschichtungszusammensetzung auf Fettbasis und die Zusammensetzung eines fermentierten Milcherzeugnisses in einem Gewichtsverhältnis von 1:5 bis 1:3 vorhanden sind.

4. Gefrorenes Riegelprodukt aus einem fermentierten Milcherzeugnis, umfassend eine Zusammensetzung eines fermentierten Milcherzeugnisses mit
a) einem Gesamtfeststoffgehalt von mindestens 22 Gew.-% der Zusammensetzung eines fermentierten Milcherzeugnisses und einem Milchfeststoffgehalt von mehr als 38 Gew.-%, bezogen auf den Gesamtfeststoffgehalt,
b) einem Gelatinegehalt von 0,7 bis 1,5 Gew.-% der Zusammensetzung eines fermentierten Milcherzeugnisses,
c) einen Gehalt an vorgelatinierter Stärke von 0,15 Gew.-% bis 0,4 Gew.-% der Zusammensetzung eines fermentierten Milcherzeugnisses und
d) einer Viskosität von 300.000 mPa•s (300.000 cP) bis 700.000 mPa•s (700.000 cP), wie bestimmt unter Verwendung eines Brookfield-Viskosimeters Modell DV-II+, ausgestattet mit einer Helipath-T-Bar-Spindel, Größe F, mit einer absenkenden senkrechten Bewegung bei 4 °C, wobei die Spindel 30 Sekunden bei 10 U/min betrieben wird.

5. Riegelprodukt aus einem fermentierten Milcherzeugnis gemäß Anspruch 4, wobei die Zusammensetzung eines fermentierten Milcherzeugnisses einen Gelatinegehalt von 0,9 bis 1,3 Gew.-% der Zusammensetzung eines fermentierten Milcherzeugnisses aufweist.

6. Riegelprodukt aus einem fermentierten Milcherzeugnis gemäß Anspruch 4, wobei die Zusammensetzung eines fermentierten Milcherzeugnisses einen Gehalt an vorgelatinierter Stärke von 0,2 bis 0,3 Gew.-% der Zusammensetzung eines fermentierten Milcherzeugnisses aufweist.

7. Riegelprodukt aus einem fermentierten Milcherzeugnis gemäß Anspruch 4, wobei die Zusammensetzung eines fermentierten Milcherzeugnisses ferner einen Prozessviskositätsmodifikator in einer Menge von 0,5 Gew.-% bis 3 Gew.-% der Zusammensetzung eines fermentierten Milcherzeugnisses umfasst.

8. Riegelprodukt aus einem fermentierten Milcherzeugnis gemäß Anspruch 7, wobei der Prozessviskositätsmodifikator ausgewählt ist aus der Gruppe bestehend aus Agar, Alginat, Carrageenan, Pectin, Stärke, Xanthan/Johannisbrotkernmehl-Gemisch, Gellangummi, Konjac-Gummi, Kombinationen davon.

9. Riegelprodukt aus einem fermentierten Milcherzeugnis gemäß Anspruch 4, ferner umfassend eine Beschichtungszusammensetzung auf Fettbasis, die die Zusammensetzung eines fermentierten Milcherzeugnisses umhüllt, wobei die Beschichtungszusammensetzung auf Fettbasis von 20 bis 80 Gew.-% Fett, bezogen auf die Beschichtungszusammensetzung auf Fettbasis, umfasst und bei 7,2 °C (45 °F) ein Feststoff ist.

10. Gekühltes oder gefrorenes Riegelprodukt aus einem fermentierten Milcherzeugnis, umfassend
a) eine Zusammensetzung eines fermentierten Milcherzeugnisses mit
i) einem Gesamtfeststoffgehalt von mindestens 22 Gew.-% der Zusammensetzung eines fermentierten Milcherzeugnisses und einem Milchfeststoffgehalt von mehr als 38 Gew.-%, bezogen auf den Gesamtfeststoffgehalt,
ii) einem Gelatinegehalt von 0,7 bis 1,5 Gew.-% der Zusammensetzung eines fermentierten Milcherzeugnisses und
iii) einer Viskosität von 200.000 mPa•s (200.000 cP) bis 700.000 mPa•s (700.000 cP), wie bestimmt unter Verwendung eines Brookfield-Viskosimeters Modell DV-II+, ausgestattet mit einer Helipath-T-Bar-Spindel, Größe F, mit einer absenkenden senkrechten Bewegung bei 4 °C, wobei die Spindel 30 Sekunden bei 10 U/min betrieben wird;
b) wobei die Zusammensetzung eines fermentierten Milcherzeugnisses in der Form von Portionen aus fermentiertem Milcherzeugnis vorliegt, die von einer Beschichtungszusammensetzung auf Fettbasis vollständig umhüllt sind, die von 20 bis 80 Gew.-% Fett, bezogen auf die Beschichtungszusammensetzung auf Fettbasis umfasst, wobei die Beschichtungszusammensetzung auf Fettbasis bei 7,2 °C (45 °F) ein Feststoff ist;
wobei das Riegelprodukt aus einem fermentierten Milcherzeugnis bei einer Temperatur bei oder unter 7,2 °C (45 °F) vorliegt.

11. Riegelprodukt aus einem fermentierten Milcherzeugnis gemäß Anspruch 4 oder 10, wobei eine Zusammensetzung eines fermentierten Milcherzeugnisses einen Gehalt an vorgelatinierter Stärke von 0,15 bis 0,4 Gew.-% der Zusammensetzung eines fermentierten Milcherzeugnisses umfasst.

12. Riegelprodukt aus einem fermentierten Milcherzeugnis gemäß Anspruch 4 oder 10, wobei das Riegelprodukt aus einem fermentierten Milcherzeugnis bei einer Temperatur von 0 °C (32 °F) bis 7,2 °C (45 °F) vorliegt.

13. Riegelprodukt aus einem fermentierten Milcherzeugnis gemäß Anspruch 4 oder 10, wobei das Produkt nach zwei Gefrier-/Auftau-Zyklen keine Syneräse zeigt.

## Revendications

1. Méthode de préparation d'un produit de barre laitière cultivé, comprenant :
a) la fourniture d'une composition laitière cultivée ayant
i) une teneur en matière sèche totale d'au moins 22% en poids de la composition laitière cultivée et une teneur en matière sèche du lait supérieure à 38% en poids sur la base de la teneur totale en matière sèche,
ii) une teneur en gélatine allant de 0,7 à 1,5% en poids de la composition laitière cultivée, et
iii) une viscosité allant de 200 000 mPa•s (200 000 cP) à 700 000 mPa•s (700 000 cP), tel que déterminé à l'aide d'un viscosimètre Brookfield modèle DV-II+, équipé d'une tige profilée en T Helipath, taille F, ayant un mouvement vertical de descente à 4°C, où la tige fonctionne pendant 30 secondes à 10 tours/min ;
b) la congélation de la composition laitière cultivée afin de former des portions laitières cultivées congelées ;
c) l'enrobage des portions laitières cultivées congelées par une composition d'enrobage à base de matière grasse comprenant de 20 à 80% de matière grasse en poids de la composition d'enrobage à base de matière grasse, la composition d'enrobage à base de matière grasse étant un solide à 7,2°C (45°F), enveloppant ainsi complètement les portions laitières cultivées congelées afin de former un produit de barre laitière cultivé congelé ; et
d) le stockage du produit de barre laitière cultivé à une température de 7,2°C (45°F) ou moins.

2. Méthode selon la revendication 1, comprenant en outre les étapes consistant à
e) laisser décongeler le produit de barre laitière cultivé congelé afin de former un produit de barre laitière cultivé réfrigéré ; et
f) stocker le produit de barre laitière cultivé réfrigéré à une température allant de 0°C (32°F) à 7,2°C (45°F).

3. Méthode selon la revendication 1, dans laquelle la composition d'enrobage à base de matière grasse et la composition laitière cultivée sont présentes selon un rapport pondéral allant de 1:5 à 1:3.

4. Produit de barre laitière cultivé congelé comprenant une composition laitière cultivée, ayant
a) une teneur en matière sèche totale d'au moins 22% en poids de la composition laitière cultivée et une teneur en matière sèche du lait supérieure à 38% en poids sur la base de la teneur totale en matière sèche,
b) une teneur en gélatine allant de 0,7 à 1,5% en poids de la composition laitière cultivée,
c) une teneur en amidon prégélatinisé allant de 0,15% à 0,4% en poids de la composition laitière cultivée, et
d) une viscosité allant de 300 000 mPa•s (300 000 cP) à 700 000 mPa•s (700 000 cP), tel que déterminé à l'aide d'un viscosimètre Brookfield modèle DV-II+, équipé d'une tige profilée en T Helipath, taille F, ayant un mouvement vertical de descente à 4°C, où la tige fonctionne pendant 30 secondes à 10 tours/min.

5. Produit de barre laitière cultivé selon la revendication 4, dans lequel la composition laitière cultivée possède une teneur en gélatine allant de 0,9 à 1,3% en poids de la composition laitière cultivée.

6. Produit de barre laitière cultivé selon la revendication 4, dans lequel la composition laitière cultivée possède une teneur en amidon prégélatinisé allant de 0,2 à 0,3% en poids de la composition laitière cultivée.

7. Produit de barre laitière cultivé selon la revendication 4, dans lequel la composition laitière cultivée comprend en outre un modificateur de viscosité de procédé selon une quantité allant de 0,5% à 3% en poids de la composition laitière cultivée.

8. Produit de barre laitière cultivé selon la revendication 7, dans lequel le modificateur de viscosité de procédé est choisi dans le groupe constitué par une gélose, un alginate, un carraghénane, une pectine, un amidon, un mélange de gomme xanthane/caroube, une gomme gellane, une gomme konjac, et des combinaisons de ceux-ci.

9. Produit de barre laitière cultivé selon la revendication 4, comprenant en outre une composition d'enrobage à base de matière grasse enveloppant la composition laitière cultivée, la composition d'enrobage à base de matière grasse comprenant de 20 à 80% de matière grasse en poids de la composition d'enrobage à base de matière grasse, et étant un solide à 7,2°C (45°F).

10. Produit de barre laitière cultivé réfrigéré ou congelé, comprenant :
a) une composition laitière cultivée ayant
i) une teneur en matière sèche totale d'au moins 22% en poids de la composition laitière cultivée et une teneur en matière sèche du lait supérieure à 38% en poids sur la base de la teneur totale en matière sèche,
ii) une teneur en gélatine allant de 0,7 à 1,5% en poids de la composition laitière cultivée, et
iii) une viscosité allant de 200 000 mPa•s (200 000 cP) à 700 000 mPa•s (700 000 cP), tel que déterminé à l'aide d'un viscosimètre Brookfield modèle DV-II+, équipé d'une tige profilée en T Helipath, taille F, ayant un mouvement vertical de descente à 4°C, où la tige fonctionne pendant 30 secondes à 10 tours/min ;
b) la composition laitière cultivée se trouvant sous la forme de portions laitières cultivées complètement enveloppées par une composition d'enrobage à base de matière grasse comprenant de 20 à 80% de matière grasse en poids de la composition d'enrobage à base de matière grasse, la composition d'enrobage à base de matière grasse étant un solide à 7,2°C (45°F) ;
où le produit de barre laitière cultivé se trouve à une température de 7,2°C (45°F) ou moins.

11. Produit de barre laitière cultivé selon la revendication 4 ou 10, dans lequel une composition laitière cultivée comprend une teneur en amidon prégélatinisé allant de 0,15 à 0,4% en poids de la composition laitière cultivée.

12. Produit de barre laitière cultivé selon la revendication 4 ou 10, où le produit de barre laitière cultivé se trouve à une température allant de 0°C (32°F) à 7,2°C (45°F) .

13. Produit de barre laitière cultivé selon la revendication 4 ou 10, où le produit ne présente pas de synérèse après deux cycles de congélation/décongélation.
